# EUROPEAN PATENT APPLICATION

(11) **EP 2 538 645 A1**
(43) Date of publication of application: **26.12.2012**
(21) Application number: 11305794.7
(22) Date of filing: 23.06.2011
(51) Int. Cl.: H04M 3/56, H04Q 3/00

(54) **A telephone conference system with automatic recovery**

(71) Applicant: Alcatel Lucent, 75007 Paris (FR)
(72) Inventor: Fadili, MOULAY, 92707 COLOMBES (FR); Brunel, Sebastien, 92707 COLOMBES (FR); Adjinacou Gnahoui, Aristide, 92707 COLOMBES (FR)
(74) Representative: Sciaux, Edmond

(57) **Abstract**

A telephone conference system with automatic recovery, for a network comprising a main site (A), at least one remote site (B), and a first link (L1) linking the main site (A) and the remote site (B); the main site comprising a main conference bridge (MCB); and the remote site (B) comprising :
- a remote conference bridge (RCB) that can be connected to the main conference bridge (MCB);
- means (RMGW1; RMGW2) for activating a second link (L2) between the main site (A) and the remote site (B), when the first link (L1) is not working any more;
- means (RMGW1; RMGW2) for activating the remote conference bridge (RCB) and connecting, to it, a terminal (Ua, Ub, Uc) of the remote site (B) that has requested to participate to a conference with at least one terminal of the main site, at least when the first link (L1) is not working any more,
- and means (RMGW1; RMGW2) for connecting the remote conference bridge (RCB) to the main conference bridge (MCB) via the second link (L2) when the first link (L1) is not working any more.

## Description

### BACKGROUND OF THE INVENTION

### Field of the invention

The present invention generally relates to a telephone conference system for setting up call conferences in an enterprise telecommunication network, and providing automatic recovery in case of interruption of a link between a main site where a conference bridge is located and a remote site where there are some terminals participating to a conference.

A telephone conference comprising more than three persons is setup by means of at least one conference bridge. Each participant calls a conference bridge dedicated to this conference. When an enterprise comprises several sites, a conference bridge is generally installed in the main site. Each remote site is respectively linked to the main site by a link that is generally private.

For instance, participants to a telephone conference are located on a main site A and on a remote site B. If the conference bridge is located in site A, and if the link is lost between the sites A and B, the participants located in site B cannot use the conference bridge any more. These participants must call again the conference bridge after the link has been re-established, in order to participate again to the conference.

### Description of the prior art

Two methods are known for calling again a conference bridge:
- Either waiting until the link is re-established, and then calling again manually. This method is not user friendly because a participant must wait the re-establishment of the link, and then dial again manually.
- Or immediately calling the conference bridge, manually, by using another link, possibly via a public network. This method is not satisfactory either, because a participant must dial again manually, and if the participant uses a public network for the new link, it increases the cost of the conference.

Thus, there is a need to provide a more satisfactory solution for restoring a telephone conference in case of link failure between a main site and a remote site.

This can be solved by applying, the system according to the invention.

### SUMMARY OF THE INVENTION

The object of the invention is a telephone conference system with automatic recovery, for a network comprising a main site, at least one remote site, and a first link linking the main site and the remote site; the main site comprising a main conference bridge;
and the remote site comprising means for enabling user terminals located in the remote site to participate to a telephone conference with user terminals located in the main site, via the first link;
characterized in that the remote site further comprises:
- a remote conference bridge that can be connected to the main conference bridge and that can add on a single channel the voice signals of several conference participants of the remote site as if there was a single remote conference participant when it is connected to the main conference bridge while a plurality of terminals of the remote site are connected to this remote conference bridge to participate to conference with at least one terminal of the main site;
- means for activating a second link between the main site and the remote site, when the first link is not working any more;
- means for activating the remote conference bridge and connecting, to it, a terminal of the remote site that has requested to participate to a conference with at least one terminal of the main site, at least when the first link is not working any more,
- and means for connecting the remote conference bridge to the main conference bridge via the second link when the first link is not working any more.

Thanks to the means for activating the remote conference bridge and connecting, to it, each terminal of the remote site that has requested to participate to conference with at least one terminal of the main site, at least when the first link is not working anymore, it possible to automatically restore a conference that was interrupted by the failure of the first link between the main site and the remote site, because the remote conference bridge automatically gathers all the conference participants of the remote site on a single voice channel, and automatically connects this single channel to the main conference bridge.

According to a first embodiment of the system according to the present invention, said means for activating the remote conference bridge and connecting, to it, a terminal of the remote site that has requested to participate to a conference with at least one terminal of the main site, at least when the first link is not working any more, comprise means for connecting said terminal:
- to the main conference bridge when the first link is working normally,
- to the remote conference bridge when the first link is not working any more.

According to a second embodiment of the system according to the present invention, means for activating the remote conference bridge and connecting, to it, a terminal of the remote site that has requested to participate to a conference with at least one terminal of the main site, at least when the first link is not working any more, comprise means for connecting said terminal to the remote conference bridge in all cases.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1 is a block diagram illustrating a first embodiment of the system according to the invention, when a link is working normally to link a main site and a remote site.
- Figure 2 is a block diagram illustrating the first embodiment of the system according to the invention, when the link is interrupted, and is replaced by a spare link.
- Figure 3 is a block diagram illustrating a second embodiment of the system according to the invention, when a link is working normally to link a main site and a remote site.
- Figure 4 is a block diagram illustrating the second embodiment of the system according to the invention, when the link is interrupted and is replaced by a spare link.

### DETAILED DESCRIPTION OF THE PREFERRED EMBODIMENTS

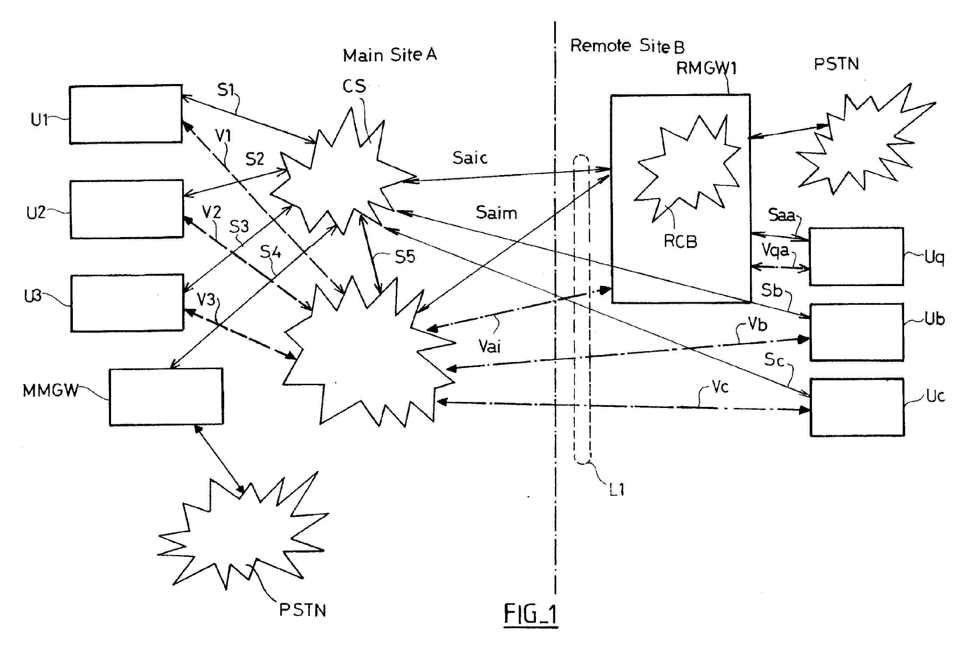

**Figure 1** is a block diagram illustrating a first embodiment of the system according to the invention, when a private Internet Protocol (IP) link L1 is working normally to link the main site A and the remote site B. This first embodiment of the conference system, according to the invention, comprises, on a main site A:
- A call server CS.
- A main conference bridge MCB, associated to the call server CS by a signaling channel S5.
- A main media gateway MMGW associated to the communication server CS by a signaling channel S4. The main media gateway MMGW is linked to a public switched telephone network PSTN. It can be used for establishing communications between terminals of the main site A and analog terminals of the public switched telephone network PSTN, or mobile terminals.
- IP user terminals U1, U2, U3 (IP Phones, or SIP phones, or softphones) that are linked to an Ethernet local area network as well as the main media gateway MMGW and the main conference bridge MCB.

This first embodiment of the conference system, according to the invention, comprises, on a remote site B:
- A remote media gateway RMGW1 linked to the public switched telephone network PSTN. The remote media gateway RMGW1 can be used for establishing communications between IP terminals of the remote site B and analog terminals of the public switched telephone network PSTN, or mobile terminals.
- A remote conference bridge RCB that is embedded in the remote media gateway RMGW1, in this example, to simplify the construction. According to this first embodiment, the remote conference bridge RCB is not activated as long as the link L1 is working normally.
- User terminals Ua, Ub, Uc. For instance the terminal Ua is an analog terminal and is linked to the remote gateway RMGW1 by an analog line. The terminals Ub and Uc are IP terminals that linked to an Ethernet local area network as well as the remote media gateway RMGW1 and the remote conference bridge RCB.

All the nodes and all the terminals of both sites, except the terminal Ua, can directly communicate by IP packets via the two local area networks that are linked by the IP link L1. The analog terminal Ua can communicate with the IP terminals via the remote media gateway RMGW1 that can interface an analog channel and an IP channel. When the IP link L1 is working normally, it supports the signaling and the voice channels used between the main site A and the remote site B. The terminals Ua, Ub, Uc of the remote site B are registered in the remote media gateway RMGW1.

When a telephone conference has been set up between the terminals U1, U2, U3, Ua, Ub, Uc:
- An IP signaling channel S1 links the IP terminal U1 and the call server CS.
- An IP voice channel V1 links the IP terminal U1 and the main conference bridge MCB.
- An IP signaling channel S2 links the IP terminal U2 and the call server CS.
- An IP voice channel V2 links the IP terminal U2 and the main conference bridge MCB.
- An IP signaling channel S3 links the IP terminal U3 and the call server C5.
- An IP voice channel V3 links the IP terminal U3 and the main conference bridge MCB.
- An analog signaling channel Saa and an analog voice channel Vaa link the terminal Ua to the remote gateway RMGW1.
- An IP signaling channel Saic links the remote gateway RMGW1 and the call server CS. It carries signaling messages to and from the terminal Ua.
- An IP signaling channel Saim links the remote gateway RMGW1 and the main media gateway MCB. It carries signaling messages to and from the terminal Ua.
- An IP voice channel Vai links the remote gateway RMGW1 to the call server CS. It carries voice signals to and from the terminal Ua.
- An IP signaling channel Sb links the IP terminal Ub and the call server CS.
- An IP voice channel Vb links the IP terminal Ub and the main conference bridge MCB.
- An IP signaling channel Sc links the IP terminal Uc and the call server C5.
- An IP voice channel Vc links the IP terminal Uc and the main conference bridge MCB.

By means of the analog signaling channel Saa, the analog terminal Ua has requested the call server CS to setup the voice channels Vai and Vaa with the main conference bridge MCB, in order to participate to the telephone conference. By means of the IP signaling channels Sb and Sc, the terminals Ub and Uc have requested the call server CS to set up the voice channels Vb and Vc with the main conference bridge MCB in order to participate to this telephone conference. By means of the IP signaling channels S1, S2, S3, the terminals U1, U2, U3 have requested the call server CS to set up the voice channels V1, V2, V3 with the main conference bridge MCB in order to participate to this telephone conference. The users have dialed the number of the main conference bridge MCB and a password, to participate to this telephone conference.

The remote media gateway RMGW1 stores, into a memory, the numbers of the terminals Ua, Ub, Uc that have called the main conference bridge MCB.

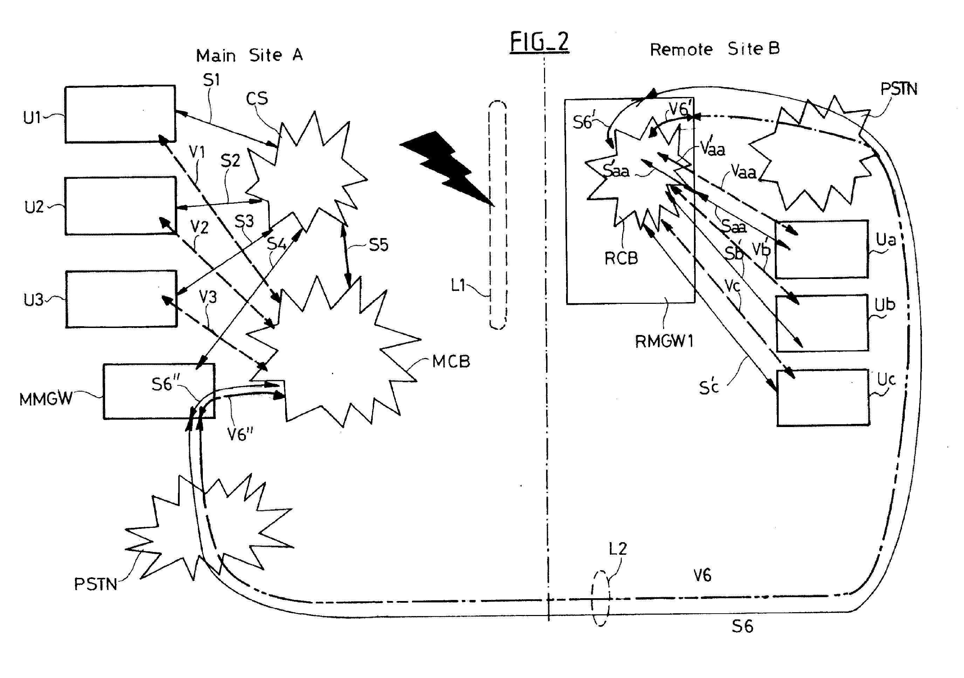

**Figure 2** is a block diagram illustrating the first embodiment of the system according to the invention, when the link L1 is interrupted, and is replaced by a spare link L2 that is an analog link (for instance) supported by the public network PSTN. The remote conference bridge RCB and the spare link L2 are automatically activated by the remote media gateway RMGW1 when this latter has detected that the IP link L1 is not working anymore (The remote conference bridge RCB could be as well started by default). The spare link L2 is established between the main media gateway MMGW and the remote media gateway RMGW1.

For each current conference wherein there are participants in the remote site B, the remote conference bridge RCB calls the main conference bridge MCB with a predetermined number (The main conference bridge MCB could call the remote conference bridge RCB as well). In this example, the link L2 is analog, so the call must be established via the media gateways MMGW and RMGW1 (In other examples, the link L2 may be a digital time division multiplexed link, a GSM link,...). For each current conference, a call agent, in the remote media gateway RMGW1, calls a predetermined number for establishing an analog voice channel V6 and an analog signaling channel S6. The main media gateway MMGW and the remote media gateway RMGW1 are both acting as interfaces converting an analog channel V6 into an IP channel, and conversely, at both ends. So the main media gateway MMGW is linked to the main conference bridge MCB by an analog voice channel V6" and an analog signaling channel S6"; and the remote media gateway RMGW1 is linked to the remote conference bridge RCB by an analog voice channel V6' and an analog signaling channel S6'.

The channels Saa, Vaa, Saic, Saim, Vai, Sb, Vb, Sc, Vc, have been released when the link L1 has been interrupted. The remote media gateway RMGW1 reads, in its memory, the numbers of the terminals Ua, Ub, Uc that have requested to be in this conference. It calls these terminals for establishing:
- A new analog signaling channel Saa linking the remote gateway RMGW1 to the user terminal Ua, and a new IP signaling channel Saa' linking the remote gateway RMGW1 to the remote conference bridge RCB. They respectively carry voice signals and signaling to and from the analog terminal Ua. The remote media gateway RMGW1 acts as an interface converting analog channels into an IP channels, and conversely.
- A new analog voice channel Vaa linking the remote gateway RMGW1 to the user terminal Ua, and a new IP voice channel Vaa' linking the remote gateway RMGW1 to the remote conference bridge RCB. They respectively carry voice signals and signaling to and from the analog terminal Ua. The remote media gateway RMGW1 acts as an interface converting the analog channels into an IP channels, and conversely.
- An IP signaling channel Sb' linking the IP terminal Ub and the remote conference bridge RCB.
- An IP voice channel Vb' linking the IP terminal Ub and the remote conference bridge RCB.
- An IP signaling channel Sc' linking the IP terminal Uc and the remote conference bridge RCB.
- An IP voice channel Vc' linking the IP terminal Uc and the remote conference bridge RCB.

The remote conference bridge RCB adds on the single channel V6 the voice signals of all the conference participants Ua, Ub, Uc of the remote site B. It also gathers the signaling on the channel S6. So the main conference bridge MCB can behave as if there was a single remote conference participant in the remote site B. The remote conference bridge RCB is considered by the main conference bridge MCB as a single new conference participant. So the terminals U1, U2, U3, Ua, Ub, Uc are again in the current conference.

When the IP link L1 is re-established, the remote media gateway RMGW1 detects that the link L1 is working again. Then:
1) According to a preferred variant, the current conference continues with the remote conference bridge RCB for connecting the terminals Ua, Ub, Uc of the remote site B, that were already engaged in the conference. For new participants, of remote site B, or for starting another conference, the remote conference bridge RCB is deactivated by the remote media gateway RMGW1. At the end of the current conference, the main conference bridge MCB sends a signaling message to the remote media gateway RMGW1, and this latter forwards it to the remote conference bridge RCB. This message de-activates the remote conference bridge RCB for the current conference that is ending. When the remote conference bridge has been deactivated for all the current conferences, the remote media gateway RMGW1 releases the spare link L2.
2) According to another variant, when the IP link L1 is re-established, the conference continues with only the main conference bridge MCB, instead of the remote conference bridge RCB, for the terminals Ua, Ub, Uc of the remote site B, that were already engaged in the conference. The remote media gateway RMGW1 re-establishes the channels Saic, Saim, Vai, Vb, Vc, Sb, Sc, via the re-established IP link L1; and then releases the spare link L2. The remote media gateway RMGW1 uses the password previously supplied by the terminals Ua, Ub, Uc.

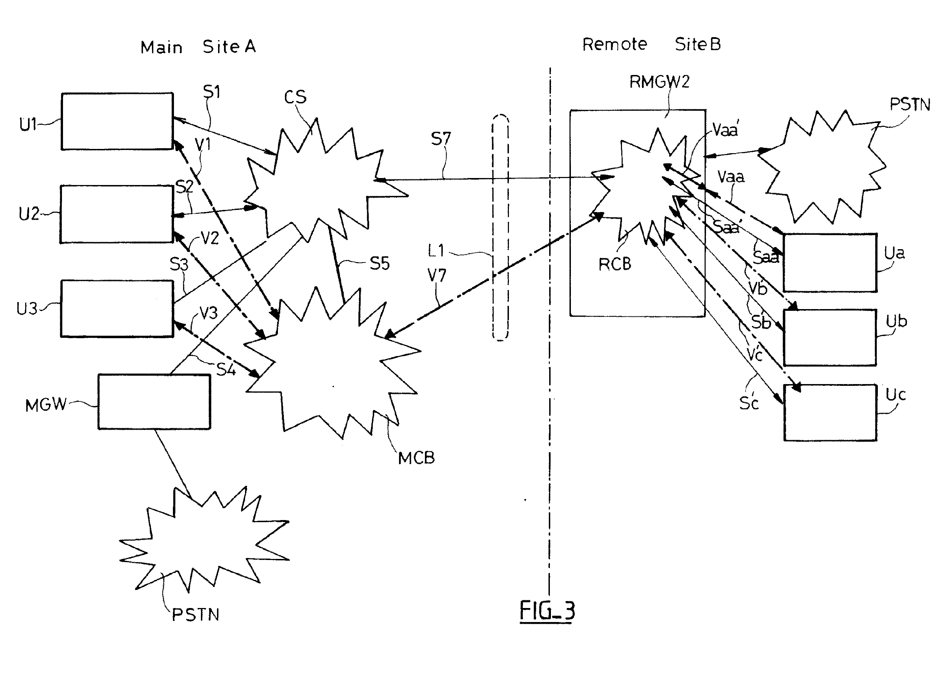

**Figure 3** is a block diagram illustrating a second embodiment of the system according to the invention, when an IP link L1 with a remote site B is working normally. This second embodiment comprises means similar to those described with reference to figure 1. In particular, it comprises a remote conference bridge RCB embedded into a remote media gateway RMGW2. There is only a difference in the management means of the remote media gateway RMGW2: In this second embodiment, the remote conference bridge RCB is activated permanently. The main conference bridge MCB and the remote conference bridge RCB are used simultaneously for all conferences comprising participants on the remote site B, even when the normal link L1 is working.

When the users of terminals Ua, Ub, Uc want to engage into a conference:
- The analog terminal Ua establishes an analog voice channel Vaa linking the remote gateway RMGW2 to this terminal Ua, and an IP voice channel Vaa' linking the remote gateway RMGW2 to the remote conference bridge RCB. They carry voice signals to and from the analog terminal Ua. The remote media gateway RMGW2 acts as an interface converting the analog channel Vaa into this IP channel Vaa', and conversely.
- The analog terminal Ua establishes an analog signaling channel Saa linking the remote gateway RMGW2 to the user terminal Ua, and an IP signaling channel Saa' linking the remote gateway RMGW2 to the remote conference bridge RCB. They respectively carry voice signals and signaling to and from the analog terminal Ua. The remote media gateway RMGW1 acts as an interface converting this analog channel Saa into an IP channel Saa', and conversely.
- The IP terminal Ub establishes an IP signaling channel Sb' and an IP voice channel Vb' linking it to the remote conference bridge RCB.
- The IP terminal Uc establishes an IP signaling channel Sc' and an IP voice channel Vc' linking it to the remote conference bridge RCB.

When the IP link L1 is working normally, if a terminal of site B requests to participate to a conference including at least one participant of main site A, the call agent of the remote gateway RMGW2 establishes, on the IP link L1:
- an IP signaling channel S6 between the call server CS and the remote conference bridge RCB, and
- an IP voice channel V6 between the main conference bridge MCB and the remote conference bridge RCB

If the IP link L1 is not working any more, the remote media gateway RMGW2 detects this loss, and it activates a spare analog link L2 supported by the public switched telephone network PLMN, in this example (In other examples, the link L2 may be a digital time division multiplexed link, a GSM link,...). The spare link L2 is established between the main media gateway MMGW and the remote media gateway RMGW2.

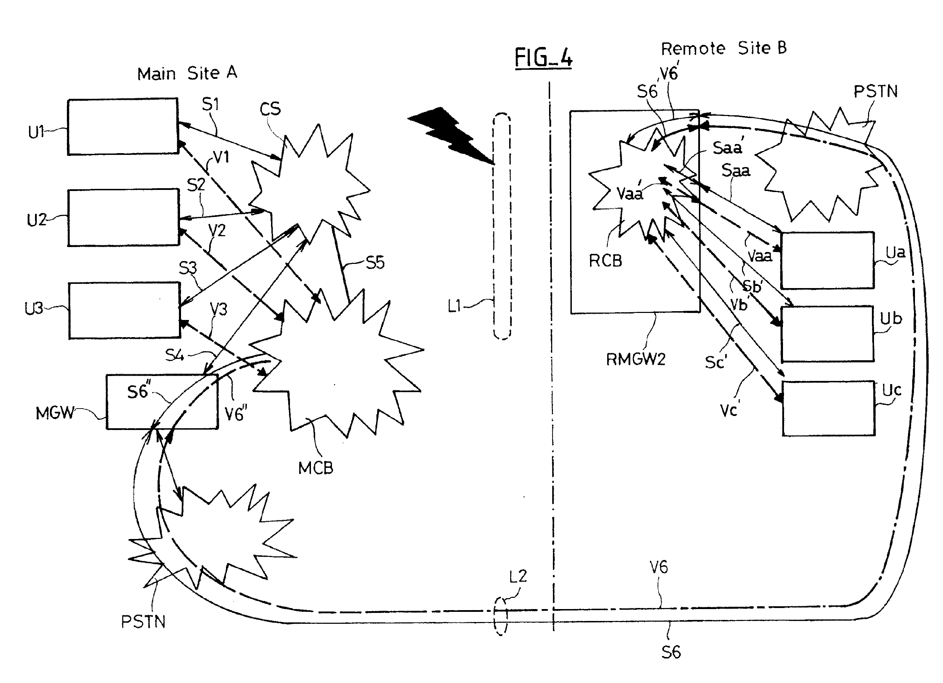

**Figure 4** is a block diagram illustrating the second embodiment of the system according to the invention, when the link L1 is interrupted, and is replaced by a spare link L2 that is an analog link supported by the public network PSTN. The spare link L2 is automatically activated by the remote media gateway RMGW2 when this latter has detected that the IP link L1 is not working anymore (The remote conference bridge RCB could detect the failure of the link L1 as well). For each current conference, the call agent of the remote media gateway RMGW2 calls the main conference bridge MCB (by means of a preconfigured telephone number). This call agent establishes an analog voice channel V6 and an analog signaling channel S6 via the spare link L2. The main media gateway MMGW and the remote media gateway RMGW2 are both acting as interfaces converting each analog channel into an IP channel, and conversely, at both ends. So the main media gateway MMGW is linked to the main conference bridge MCB by an analog voice channel V6" and an analog signaling channel S6"; and the remote media gateway RMGW2 is linked to the remote conference bridge RCB by an analog voice channel V6' and an analog signaling channel S6'.

When the IP link L1 is re-established, the conference continues via the remote conference bridge RCB, for the terminals Ua, Ub, Uc of the remote site B, that are already engaged in the conference. The remote media gateway RMGW2 calls the main conference bridge MCB, using the re-established IP link L1, and the password previously supplied by the terminals Ua, Ub, Uc. This call re-establishes the channels S7 and V7 respectively to the call server CS and to the main conference bridge MCB. Then the remote media gateway RMGW2 releases the spare link L2.

The interruption of the link L1 interrupts the conference for a short time, until the link L2 can replace the link L1. So a voice guide notification can be used to inform users that the reconnection is under way.

## Claims

1. A telephone conference system with automatic recovery, for a network comprising a main site (A), at least one remote site (B), and a first link (L1) linking the main site (A) and the remote site (B);
the main site comprising a main conference bridge (MCB);
and the remote site (B) comprising means (RMGW1; RMGW2) for enabling user terminals (Ua, Ub, Uc) located in the remote site (B) to participate to a telephone conference with user terminals (U1, U2, U3) located in the main site (A), via the first link (L1);
**characterized in that** the remote site (B) further comprises:
- a remote conference bridge (RCB) that can be connected to the main conference bridge (MCB) and that can add on a single channel the voice signals of several conference participants of the remote site as if there was a single remote conference participant when it is connected to the main conference bridge while a plurality of terminals (Ua, Ub, Uc) of the remote site (B) are connected to this remote conference bridge (RCB) to participate to conference with at least one terminal of the main site;
- means (RMGW1; RMGW2) for activating a second link (L2) between the main site (A) and the remote site (B), when the first link (L1) is not working any more;
- means (RMGW1; RMGW2) for activating the remote conference bridge (RCB) and connecting, to it, a terminal (Ua, Ub, Uc) of the remote site (B) that has requested to participate to a conference with at least one terminal of the main site, **at least when** the first link (L1) is not working any more,
- and means (RMGW1; RMGW2) for connecting the remote conference bridge (RCB) to the main conference bridge (MCB) via the second link (L2) when the first link (L1) is not working any more.

2. A system according to claim 1, **characterized in that** said means (RMGW1) for activating the remote conference bridge (RCB) and connecting, to it, a terminal (Ua, Ub, Uc) of the remote site (B) that has requested to participate to a conference with at least one terminal of the main site, **at least when** the first link (L1) is not working any more, comprise means for connecting said terminal (Ua, Ub, Uc):
- to the main conference bridge (MCB) when the first link (L1) is working normally,
- to the remote conference bridge (RCB) when the first link (L1) is not working any more.

3. A system according to claim 1, **characterized in that** said means (RMGW2) for activating the remote conference bridge (RCB) and connecting, to it, a terminal (Ua, Ub, Uc) of the remote site (B) that has requested to participate to a conference with at least one terminal of the main site, **at least when** the first link (L1) is not working any more, comprise means for connecting said terminal (Ua, Ub, Uc) to the remote conference bridge (RCB) in all cases.
